(19) Europäisches Patentamt
European Patent Office
Office européen des brevets

(11) EP 1 274 753 B1

# (12) EUROPÄISCHE PATENTSCHRIFT

(45) Veröffentlichungstag und Bekanntmachung des Hinweises auf die Patenterteilung:
**27.07.2005 Patentblatt 2005/30**

(21) Anmeldenummer: **01938098.9**

(22) Anmeldetag: **10.04.2001**

(51) Int Cl.$^7$: **C08F 220/00**, C08F 220/04, C08F 218/04

(86) Internationale Anmeldenummer:
**PCT/EP2001/004082**

(87) Internationale Veröffentlichungsnummer:
**WO 2001/077195 (18.10.2001 Gazette 2001/42)**

## (54) MULTIFUNKTIONELLE POLYMERE, VERFAHREN ZU IHRER HERSTELLUNG UND IHRE VERWENDUNG

MULTIFUNCTIONAL POLYMERS, METHOD FOR THE PRODUCTION AND USE THEREOF

POLYMERES MULTIFONCTIONNELS, LEUR PROCEDE DE PRODUCTION ET LEUR UTILISATION

(84) Benannte Vertragsstaaten:
**AT BE CH CY DE DK ES FI FR GB GR IE IT LI LU MC NL PT SE TR**

(30) Priorität: **12.04.2000 DE 10018192**

(43) Veröffentlichungstag der Anmeldung:
**15.01.2003 Patentblatt 2003/03**

(73) Patentinhaber: **BASF AKTIENGESELLSCHAFT
67056 Ludwigshafen (DE)**

(72) Erfinder:
- **RAU, Iris
68642 Bürstadt (DE)**
- **PERNER, Johannes
67434 Neustadt (DE)**
- **OTT, Christian
67346 Speyer (DE)**
- **BAUR, Richard
67112 Mutterstadt (DE)**

(56) Entgegenhaltungen:
**US-A- 2 611 765**
**US-A- 2 728 746**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 274 753 B1

## Beschreibung

Die Erfindung betrifft multifunktionelle Polymere, die einpolymerisierte Einheiten von

(a) α-Acyloxyacrylnitril, α-Halogenacrylsäure, α-Acyloxyacrylsäureester und/oder α-Hydroxyacrylsäure,

(b) monoethylenisch ungesättigten Carbonsäuren,

(c) Vinylestern von gesättigten aliphatischen Monocarbonsäuren und/oder Vinylalkohol und gegebenenfalls

(d) anderen mit den Monomeren (a) bis (c) copolymerisierbaren monoethylenisch ungesättigten Monomeren und gegebenenfalls

(e) mindestens zwei ethylenisch ungesättigte Doppelbindungen enthaltenden Vernetzern

enthalten.

Aus der US-A-2 728 746 sind Polymerisate von α-Hydroxyacrylsäure bekannt, die durch Polymerisieren von α-Acyloxyacrylaten gegebenenfalls zusammen mit anderen Monomeren wie Ethylen, Styrol, Acrylsäure oder Methacrylsäure und anschließende Hydrolyse der einpolymerisierten α-Acyloxyacrylat-Einheiten mit Basen hergestellt werden. Aus der DE-A-24 31 823 ist ein verfahren zur Herstellung von wasserlöslichen Salzen von Poly-α-hydroxyacrylsäure bekannt, wobei man α,β-Dichlorpropionsäure durch thermische Chlorwasserstoffabspaltung in α-Chloracrylsäure umwandelt, anschließend die α-Chloracrylsäure in wässriger Lösung polymerisiert und das Polymerisat mit einer wässrigen Lösung eines Alkalimetallhydroxids oder Ammoniak behandelt. Die wasserlöslichen Salze der so erhältlichen Poly-α-hydroxyacrylsäure werden beispielsweise als Sequestriermittel für Metallionen und als Builder in Detergentien bzw. Reinigungsmitteln eingesetzt.

Aus der EP-A-381 261 sind nichtwässrige Flüssigwaschmittel bekannt, die ein nichtionisches Tensid und eine dispergierte feinteilige Phase aus einem Carbonat, einer Mischung von Carbonat und Bicarbonat-Builder und ein Carboxylgruppen enthaltendes Polymer, z.B. ein Copolymerisat aus Maleinsäure und Acrylsäure, enthalten. Als Carboxylgruppen enthaltende Polymere kann man gemäß den Angaben in der Beschreibung auch Poly-α-hydroxyacrylsäure einsetzen. Die Flüssigwaschmittel können außerdem Bleichmittel enthalten.

Aus der DE-A-31 39 091 sind phosphatfreie oder phosphatarme Wasch- und Reinigungsmittel bekannt, die eine Polycarbonsäure in Salzform, ein Alkaliheptonat oder Alkaliglukonat, ein Alkalimetallsilikat und ein Alkalihydroxid enthalten. Als Polycarbonsäuren kommen vor allem die Polymerisate der Acrylsäure, α-Hydroxyacrylsäure, Maleinsäure, Itaconsäure, Mesaconsäure, Arconitsäure, Methylenmalonsäure und Citraconsäure in Betracht. Auch die Copolymerisate der genannten Carbonsäuren untereinander oder mit ethylenisch ungesättigten Verbindungen wie Ethylen, Propylen, Vinylether, Vinylacetat, Furan, Acrolein, Acrylamid, Acrylnitril, Methacrylsäure oder Crotonsäure sind geeignete Polycarbonsäuren. Aus der EP-A-508 934 sind ebenfalls Waschmittelmischungen bekannt, die Polymere der Hydroxyacrylsäure als Builder enthalten können.

Aus der EP-A-814 193 ist ein Bleichstabilisator für Peroxide bekannt, der Homo- oder Copolymerisate von α-Hydroxyacrylsäure oder deren wasserlösliche Salze, Homo- oder Copolymere von Acrylsäure, Methacrylsäure und Maleinsäure und als weitere Komponente Diethylentriaminpentaessigsäure, Diethylentetraminhexaessigsäure oder deren wasserlösliche Salze enthält. Die drei Komponenten besitzen eine synergistische Wirkung als Bleichstabilisator für Peroxide.

Der vorliegenden Erfindung liegt die Aufgabe zugrunde, neue Stoffe zur Verfügung zu stellen, die gegenüber den bekannten Polymeren auf Basis von α-Hydroxycarbonsäure eine verbesserte Wirkung haben.

Die Aufgabe wird erfindungsgemäß gelöst mit multifunktionellen Polymeren, die einpolymerisierte Einheiten von

(a) α-Acyloxyacrylnitril, α-Halogenacrylsäure, α-Acyloxyacrylsäureester und/oder α-Hydroxyacrylsäure,

(b) monoethylenisch ungesättigten Carbonsäuren,

(c) Vinylestern von gesättigten aliphatischen Monocarbonsäuren und/oder Vinylalkohol und gegebenenfalls

(d) anderen, mit den Monomeren (a) bis (c) copolymerisierbaren monoethylenisch ungesättigten Monomeren und gegebenenfalls

(e) mindestens zwei ethylenisch ungesättigte Doppelbindungen enthaltenden Vernetzern

enthalten und einen K-Wert von mindestens 7 (bestimmt nach H. Fikentscher in Aceton bei 25°C und einer Polymerkonzentration von 1 Gew.-%) haben.

Gegenstand der Erfindung ist außerdem ein Verfahren zur Herstellung von multifunktionellen Polymeren, wobei man Monomermischungen aus

(a) α-Acyloxyacrylnitril, α-Halogenacrylsäure und/oder α-Acyloxyacrylsäureester,

(b) monoethylenisch ungesättigten Carbonsäuren,

(c) Vinylestern von gesättigten aliphatischen Monocarbonsäuren und gegebenenfalls

(d) anderen, mit den Monomeren (a) bis (c) copolymerisierbaren monoethylenisch ungesättigten Monomeren und gegebenenfalls

(e) mindestens zwei ethylenisch ungesättigte Doppelbindungen enthaltenden Vernetzern

in Gegenwart von Radikale bildenden Polymerisationsinitiatoren copolymerisiert und die einpolymerisierten Monomereinheiten (a) und (c) der so erhältlichen Copolymerisate partiell oder vollständig hydrolysiert.

Vorzugsweise copolymerisiert man Monomermischungen aus

(a) 2 bis 98 mol-% α-Acyloxyacrylnitril, α-Halogenacrylsäure und/oder α-Acyloxyacrylsäureester,

(b) 1 bis 95 mol-% monoethylenisch ungesättigten Carbonsäuren,

(c) 1 bis 90 mol-% Vinylestern von gesättigten aliphatischen Monocarbonsäuren und gegebenenfalls

(d) 0 bis 20 mol-% anderen, mit den Monomeren (a) bis (c) copolymerisierbaren monoethylenisch ungesättigten Monomeren und

(e) 0 bis 10 mol-% mindestens zwei ethylenisch ungesättigte Doppelbindungen enthaltenden Vernetzern

wobei die Summe der Prozentangaben (a) bis (e) immer 100 beträgt und hydrolysiert die Einheiten a) und (c) der so erhältlichen Copolymerisate partiell oder vollständig.

α-Acyloxyacrylnitril und α-Acyloxyacrylsäureester können beispielsweise mit Hilfe der folgenden Formel charakterisiert werden:

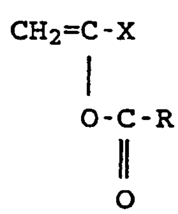

(I),

in der X = -CN oder

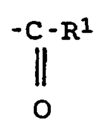

,

R = H, $C_1$-$C_6$-Alkyl, Aryl und
$R^1$ = OH, $C_1$-$C_6$-Alkoxy, $C_1$-$C_6$-Alkyl,
Aryl und $C_5$-$C_8$-Cycloalkyl.

Beispiele für α-Acyloxyacrylnitrile sind α-Acetoxyacrylnitril, α-Propionyloxyacrylnitril und α-Butyryloxyacrylnitril.

α-Acyloxyacrylsäureester der Formel I mit X = CO-$R^1$ und R = $C_1$-$C_6$-Alkyl sind beispielsweise α-Acetoxyacryl-

säuremethylester (R = $CH_3$, $R^1$ = $OCH_3$), α-Acetoxyacrylsäureethylester (R = $CH_3$, $R^1$ = $OC_2H_5$), α-Acetoxyacrylsäure-n-propylester (R = $CH_3$, $R^1$ = $OCH_2CH_2CH_3$), α-Acetoxyacrylsäureisopropylester (R = $CH_3$, $R^1$ = $OCH(CH_3)_2$), α-Acetoxyacrylsäure-n-butylester (R = $CH_3$, $R^1$ = $O(CH_2)_3CH_3$), α-Acetoxyacrylsäure-isobutylester, α-Acetoxyacrylsäureisodecylester, α-Propionyloxyacrylsäuremethylester (R = $C_2H_5$, $R^1$ = $OCH_3$), α-Propionyloxyacrylsäureethylester (R = $C_2H_5$, $R^1$ = $OC_2H_5$), α-Butyryloxyacrylsäuremethylester (R = $C_3H_7$, $R^1$ = $OCH_3$) und α-Butoxyacrylsäureethylester.

Unter α-Acyloxyacrylsäureester sollen auch solche Verbindungen verstanden werden, die nach Polymerisation und Hydrolyse α-Hydroxyacrylsäureeinheiten enthaltende Polymere ergeben. Dazu gehören z. B. cyclische Acyloxyacrylate der Formeln

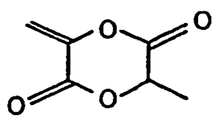 (II) und 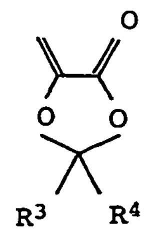 (III),

in der $R^3$ und $R^4$ gleich oder verschieden sind und für H, $CH_3$, Et, Pr, i-Pr, n-Bu, i-Bu, Aryl oder substituiertes Aryl stehen.

Bei der Verbindung der Formel II handelt es sich um ein cyclisches Acyloxyacrylat (3,6-Bis(methylen)-1,4-dioxan-2,5-dion) und bei den Verbindungen der Formel III um cyclische Acetale vom 5-Methylen-1,3-dioxolan-4-on-Typ, deren Acetalkomponente sich beispielsweise von einem Aldehyd wie Formaldehyd, Acetaldehyd, Propionaldehyd, Isobutyraldehyd oder Benzaldehyd bzw. von einem Keton wie Aceton, Methylethylketon oder Cyclohexanon ($R^3$, $R^4$ = Alkyl, Aralkyl) ableitet.

Geeignete α-Halogenacrylsäuren sind beispielsweise α-Chloracrylsäure und α-Bromacrylsäure.

Die multifunktionellen Polymeren enthalten als Komponente (b) einpolymerisierte Einheiten von monoethylenisch ungesättigten Carbonsäuren, z.B. Acrylsäure, Methacrylsäure, Maleinsäure, Maleinsäureanhydrid, Itaconsäure, Fumarsäure, Mesaconsäure, Aconitsäure, Methylenmalonsäure und Citraconsäure. Vorzugsweise kommen aus dieser Gruppe von Monomeren Acrylsäure, Methacrylsäure, Maleinsäure und Maleinsäureanhydrid in Betracht.

Als Komponente (c) enthalten die multifunktionellen Polymeren Vinylester von gesättigten aliphatischen Monocarbonsäuren in einpolymerisierter Form. Die Vinylester leiten sich beispielsweise von einbasischen, gesättigten Carbonsäuren mit 2 bis 18 C-Atomen ab. Beispiele hierfür sind Vinylacetat, Vinylpropionat, Vinylbutyrat, Vinylisobutyrat, Vinylpalmitat, Vinylstearat und Vinyllaurat. Der Copolymerisation kann man beispielsweise einen einzigen Vinylester oder auch eine Mischung aus zwei verschiedenen Vinylestern einsetzen, z.B. Mischungen aus Vinylacetat und Vinylpropionat oder Mischungen aus Vinylacetat und Vinylbutyrat. Vorzugsweise verwendet man aus dieser Gruppe von Monomeren Vinylacetat.

Andere mit den Monomeren (a) bis (c) copolymerisierbare monoethylenisch ungesättigte Monomere sind beispielsweise Acrylnitril, Methacrylnitril, Acrylamid, Methacrylamid, Acrolein, Ethylen, Isobutylen, Propylen, Diisobuten, Styrol, Acrylamido-2-methyl-propansulfonsäure, Vinylsulfonsäure, Allylsulfonsäure, Methallylsulfonsäure, Vinylphosphonsäure, Allylphosphonsäure, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methylimidazol, 1-Vinyl-2-methylimidazolin und Hydroxyalkylester mit 2 bis 6 C-Atomen in der Hydroxyalkylgruppe von monoethylenisch ungesättigten 3 bis 6 C-Atomen enthaltenden ethylenisch ungesättigten Carbonsäuren wie Hydroxyethylacrylat, Hydroxyethylmethacrylat, Hydroxy-n-propylacrylat, Hydroxyisopropylacrylat und Hydroxyisobutylacrylat. Die Monomeren, die freie Säuregruppen enthalten wie beispielsweise Vinylsulfonat, können auch in Form der Alkali- und Ammoniumsalze bei der Copolymerisation eingesetzt werden.

Monomere der Gruppe (e), die mindestens zwei ethylenisch ungesättigte Doppelbindungen enthalten, werden üblicherweise als Vernetzer bezeichnet. Geeignete Vernetzer sind beispielsweise Diacrylate oder Dimethacrylate von mindestens zweiwertigen gesättigten Alkoholen, z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9000. Polyethylenglykole bzw. Polypropylenglykole, die für die Herstellung der Diacrylate oder Dimethacrylate verwendet werden, haben vorzugsweise ein Molekulargewicht von jeweils 400 bis 2000. Außer den Homopolymerisaten des Ethylenoxids bzw. Propylenoxids können auch

Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich außerdem Vinylester von ethylenisch ungesättigten $C_3$-$C_6$-Carbonsäuren, z.B. Vinylacrylat, Vinylmethacrylat oder Vinylitaconat. Als Vernetzer geeignet sind außerdem Vinylester von mindestens 2 Carboxylgruppen enthaltenden gesättigten Carbonsäuren sowie Di- und Polyvinylether von mindestens zweiwertigen Alkoholen, z.B. Adipinsäuredivinylester, Butandioldivinylether und Trimethylolpropantrivinylether. Weitere Vernetzer sind Allylester ethylenisch ungesättigter Carbonsäuren, z.B. Allylacrylat und Allylmethacrylat, Allylether von mehrwertigen Alkoholen, z.B. Pentaerithrittriallylether, Triallylsaccharose und Pentaallylsaccharose. Außerdem eignen sich als Vernetzer Methylenbismethacrylamid, Divinylethylenharnstoff, Divinylpropylenharnstoff, Divinylbenzol, Divinyldioxan, Tetraallylsilan und Tetravinylsilan.

Die multifunktionellen Polymeren enthalten vorzugsweise einpolymerisierte Einheiten (a) von α-Hydroxyacrylsäure und Einheiten (c) von partiell oder vollständig hydrolysierten Vinylestern von gesättigten Monocarbonsäuren und haben einen K-Wert von mindestens 6 (bestimmt nach H. Fikentscher in Wasser bei 25°C und einer Polymerkonzentration von 1 Gew.-%). Die multifunktionellen Polymeren enthalten beispielsweise einpolymerisierte Einheiten von

(a) 2 bis 98 mol-% α-Acyloxyacrylnitril, α-Halogenacrylsäure, α-Acyloxyacrylsäureester und/oder α-Hydroxyacrylsäure,

(b) 1 bis 95 mol-% mindestens einer monoethylenisch ungesättigten Carbonsäure,

(c) 1 bis 90 mol-% mindestens eines Vinylesters von gesättigten aliphatischen Monocarbonsäuren und/oder Vinylalkohol,

(d) 0 bis 20 mol-% anderen, mit den Monomeren (a) bis (c) copolymerisierbaren monoethylenisch ungesättigten Monomeren und

(e) 0 bis 10 mol-% eines mindestens zwei ethylenisch ungesättigte Doppelbindungen enthaltenden Vernetzers,

wobei die Summe der Angaben in mol-% immer 100 beträgt.

Bevorzugt in Betracht kommende multifunktionelle Polymere enthalten einpolymerisierte Einheiten von

(a) 5 bis 95 mol-% α-Acyloxyacrylnitril, α-Halogenacrylsäure, α-Acyloxyacrylsäureester und/oder α-Hydroxyacrylsäure,

(b) 2 bis 90 mol-% mindestens einer monoethylenisch ungesättigten Carbonsäure,

(c) 2 bis 70 mol-% mindestens eines Vinylesters von gesättigten aliphatischen Monocarbonsäuren und/oder Vinylalkohol und

(d) 0 bis 15 mol-% anderen, mit den Monomeren (a) bis (c) copolymerisierbaren monoethylenisch ungesättigten Monomeren,

wobei die Summe der Angaben in mol-% immer 100 beträgt.

Besonders bevorzugt sind solche Polymeren, die einpolymerisierte Einheiten von

(a) 10 bis 90 mol-% α-Acyloxyacrylnitril, α-Halogenacrylsäure, α-Acyloxyacrylsäureester und/oder α-Hydroxyacrylsäure,

(b) 5 bis 80 mol-% mindestens einer monoethylenisch ungesättigten Carbonsäure,

(c) 5 bis 60 mol-% mindestens eines Vinylesters von gesättigten aliphatischen Monocarbonsäuren und/oder Vinylalkohol und

(d) 0 bis 10 mol-% anderen, mit den Monomeren (a) bis (c) copolymerisierbaren monoethylenisch ungesättigten Monomeren

enthalten, wobei die Summe der Angaben in mol-% immer 100 beträgt. Diese Polymeren enthalten meistens einpolymerisierte Einheiten von

(a) 5 bis 95 mol-% α-Hydroxyacrylsäure,

(b) 2 bis 90 mol-% Acrylsäure, Methacrylsäure, Maleinsäure und/oder Maleinsäureanhydrid und

(c) 2 bis 70 mol-% Vinylacetat und/oder Vinylalkohol,

wobei die Summe der Angaben in mol-% immer 100 beträgt.

Die multifunktionellen Polymeren werden durch Polymerisieren der Monomeren (a) bis (e) in Gegenwart von Radikale bildenden Polymerisationsinitiatoren und anschließende partielle oder vollständige Hydrolyse der einpolymerisierten Monomereinheiten (a) und (c) hergestellt. Bei der Hydrolyse der einpolymerisierten Monomereinheiten (a) entstehen α-Hydroxyacrylsäure-Einheiten. Aus den einpolymerisierten α-Acyloxyacrylnitril-Einheiten erhält man beispielsweise bei der Einwirkung von wässrigen Basen unter Abspaltung der α-Acylgruppe und vollständiger Hydrolyse der Nitrilgruppe ebenfalls α-Hydroxyacrylsäure-Einheiten in Form der Salze. Bei der alkalischen Hydrolyse von α-Halogenacrylsäure einpolymerisiert enthaltenden Polymeren entstehen durch Abspaltung der Halogengruppe α-Hydroxyacrylsäure-Einheiten enthaltende Polymere. α-Acyloxyacrylsäureester einpolymerisiert enthaltende Polymere werden ebenfalls unter Hydrolyse der Estergruppen zu α-Hydroxyacrylsäure-Einheiten enthaltenen Polymeren hydrolysiert. Die Hydrolyse kann partiell oder vollständig erfolgen. Die Hydrolyse der Copolymerisate wird meistens so weit geführt, daß wasserlösliche oder zumindest in Wasser dispergierbare Copolymerisate entstehen. Der Hydrolysegrad beträgt beispielsweise 10 bis 100, vorzugsweise 50 bis 100 %.

Die Polymerisation der Monomeren (a) bis (e) wird nach bekannten Verfahren nach Art einer Lösungs-, Fällungs- oder Emulsionspolymerisation durchgeführt. Sie kann auch in Substanz erfolgen. Die Polymerisationstemperaturen liegen beispielsweise in dem Temperaturbereich von 50 bis 150°C, vorzugsweise 60 bis 130°C. Die Copolymerisation kann bei Normaldruck, unter vermindertem Druck oder auch unter erhöhtem Druck, z.B. bei Drücken bis zu 20 bar durchgeführt werden. Geeignete Lösemittel für die Lösungspolymerisation sind beispielsweise Kohlenwasserstoffe wie Toluol und Xylol, $C_1$-$C_6$-Alkohole wie Methanol, Ethanol, Isopropanol, n-Propanol, Isobutanol, n-Butanol, tert.-Butanol, n-Hexanol und Cyclohexanol oder Ketone wie Methylethylketon und Aceton.

Die Emulsionspolymerisation wird vorzugsweise in Wasser durchgeführt, wobei man gegebenenfalls oberflächenaktive Substanzen in Mengen bis zu 20 Gew.-%, bezogen auf das Reaktionsgemisch, verwendet. Bevorzugte Reaktionsmedien für die Polymerisation der Monomeren sind Alkohole, aromatische Kohlenwasserstoffe und Wasser. Zum Initiieren der Polymerisation verwendet man die üblichen Starter wie Peroxide, z.B. Perbenzoat, Perpivalat und Peroctoat, Wasserstoffperoxid, Persulfate und Azoverbindungen wie Azobisisobutyronitril oder wasserlösliche Azoverbindungen wie 2,2'-Azo-bis(2-amidinopropan)dihydrochlorid. Die Polymerisation kann gegebenenfalls in Gegenwart von Reglern durchgeführt werden. Als Regler kommen sämtliche bekannten regelnd wirkenden Substanzen in Betracht. Bevorzugt eingesetzte Regler enthalten Schwefel in gebundener Form wie Dodecylmercaptan, 2-Mercaptoessigsäure, Mercaptopropionsäure, 2-Mercaptoethanol und Mercaptobutanol. Sofern man bei der Polymerisation ein Löse- bzw. Verdünnungsmittel verwendet, beträgt der Feststoffgehalt der Reaktionsmischung beispielsweise 10 bis 70, vorzugsweise 20 bis 60 Gew.-%.

Die Copolymerisate werden im Anschluß an die Polymerisation hydrolysiert. Die Hydrolyse kann mit Ausnahme von Polymeren, die α-Halogenacrylsäure einpolymerisiert enthalten, sowohl im basischen als auch im sauren pH-Bereich durchgeführt werden. α-Halogenacrylsäureeinheiten enthaltende Polymerisate können jedoch nur mit Basen hydrolysiert werden. In den meisten Fällen benötigt man für ein Äquivalent einer hydrolysierbaren Gruppe ein Äquivalent einer Base oder Säure. Man kann jedoch die Basen oder Säuren bis zu einem Überschuß von 1,5, vorzugsweise bis zu 1,2 Äquivalenten pro hydrolysierbarer Gruppe einsetzen. Die Zugabe einer Base kann auf einmal oder kontinuierlich erfolgen. Man kann auch eine Base vorlegen und das zu hydrolysierende Polymer auf einmal zugeben oder kontinuierlich oder absatzweise zudosieren. Geeignete Basen für die Hydrolyse sind insbesondere Alkalimetallhydroxide wie Natronlauge oder Kalilauge, Ammoniak oder Amine.

Sofern man die Hydrolyse mit einer Säure vornimmt, genügen bereits katalytische Mengen, z.B. 0,01 bis 0,1 Äquivalente einer Säure pro Äquivalent der zu hydrolysierenden Gruppe. Die Hydrolyse kann bei Temperaturen von beispielsweise 20 bis 220, vorzugsweise 50 bis 150°C durchgeführt werden. Bei Temperaturen oberhalb des Siedepunktes von Wasser arbeitet man in druckdicht verschlossenen Apparaturen. Falls die Polymerisation in einem organischen Lösemittel durchgeführt worden ist, kann man während der Hydrolyse einen Teil oder das gesamte organische Lösemittel abdestillieren. Ebenso kann man während der Hydrolyse die beispielsweise aus a-Acyloxyacrylsäureestereinheiten freigesetzten Alkohole aus dem Reaktionsgemisch abdestillieren.

Die Hydrolyse der einpolymerisierten Einheiten von Vinylestern von gesättigten Monocarbonsäuren zu Vinylalkoholeinheiten wird vorzugsweise mit Alkalimetallhydroxiden vorgenommen. Die Copolymeren enthalten vorzugsweise als Monomer (c) Vinylacetat einpolymerisiert. Die Hydrolyse der einpolymerisierten Einheiten (c) erfolgt entweder partiell, z.B. zu 10 bis 99 % oder vollständig. Meistens enthalten die hydrolysierten Copolymerisate noch 50 bis 0,1 % an nicht verseiften vinylestereinheiten.

Meistens polymerisiert man Monomermischungen aus

a) 2 bis 98 mol-% α-Acyloxyacrylnitril, α-Halogenacrylsäure und/oder Acyloxyacrylsäureester,

b) 1 bis 95 mol-% monoethylenisch ungesättigten Carbonsäuren,

c) 1 bis 90 mol-% mindestens eines Vinylesters einer aliphatischen Monocarbonsäure,

d) 0 bis 20 mol-% anderen, mit den Monomeren (a) bis (c) copolymerisierbaren monoethylenisch ungesättigten Monomeren und

e) 0 bis 10 mol-% eines mindestens zwei ethylenisch ungesättigte Doppelbindungen enthaltenden Vernetzers,

wobei die Summe der Prozentangaben (a) bis (e) immer 100 beträgt, und hydrolysiert anschließend die Einheiten (a) und (c) der so erhältlichen Copolymerisate partiell oder vollständig.

Besonders bevorzugt ist eine Verfahrensvariante, bei der man

(a) 5 bis 95 mol-% α-Acyloxyacrylnitril, α-Chloracrylsäure und/oder α-Acetoxyacrylsäureester,

(b) 2 bis 90 mol-% Acrylsäure, Methacrylsäure, Maleinsäure und/oder Maleinsäureanhydrid und

(c) 2 bis 70 mol-% Vinylacetat

copolymerisiert, wobei die Summe der Angaben in mol-% immer 100 beträgt, und anschließend die einpolymerisierten Einheiten (a) und (c) der Copolymerisate partiell oder vollständig hydrolysiert.

Die oben beschriebenen multifunktionellen Polymeren werden als Zusatz zu Wasch- und Reinigungsmitteln, zur Bindung mehrwertiger Metallionen, als Stabilisator bei der Textilbleiche und der Bleiche von Faserstoffen für die Papierherstellung verwendet. Die Polymeren wirken beim Einsatz in Waschmitteln sowohl eine Inkrustationsinhibierung wie auch eine Verstärkung der Primärwaschwirkung und stabilisieren gleichzeitig Bleichmittel wie Perborate oder Percarbonate.

Die Copolymerisate werden beispielsweise in Mengen von 1 bis 20, vorzugsweise 2 bis 10 Gew.-% in Wasch- und Reinigungsmitteln, jeweils bezogen auf die gesamte Formulierung, eingesetzt. Die bei der Textilbleiche und der Bleiche von Papierstoff eingesetzten Mengen an multifunktionellen Polymeren betragen beispielsweise 1 bis 20 Gew.-%, bezogen auf die wässrige Bleichmittelmischung.

Die erfindungsgemäßen Copolymerisate sind außerdem hervorragende Komplexbildner für mehrwertige Metallionen wie Calcium-, Eisen-, Mangan- und Kupferionen.

Die K-Werte der Copolymerisate wurden nach H. Fikentscher Cellulose-Chemie, Band 13, 58 - 64 und 71 - 74 (1932) bestimmt. Die K-Wertbestimmung für die unverseiften Copolymerisate erfolgte in Aceton bei 25°C und einer Polymerkonzentration von 1 Gew.-%. Der K-Wert der hydrolysierten Copolymerisate wurde - sofern die Copolymerisate vollständig in Wasser löslich waren - in Wasser bei 25°C und einer Polymerkonzentration von 1 Gew.-% bestimmt.

Sofern nicht (wie bei Vgl.bsp. 2) anders vermerkt, wurden bei der Hydrolyse jeweils 100 % der zur vollständigen Verseifung und Neutralisation aller COOH-Gruppen theoretisch erforderlichen Basenmenge eingesetzt.

Beispiel 1:

Terpolymer, hergestellt aus 82 mol-% α-Acetoxyacrylsäureethylester, 10 mol-% Acrylsäure und 8 mol-% Vinylacetat.

In einem 250 ml fassenden Mehrhalskolben aus Glas, der mit einem Blattrührer, einem Rückflußkühler, einem Innenthermometer sowie zwei Tropftrichtern versehen war, wurden 25 g Isopropanol vorgelegt und unter einer Stickstoffatmosphäre in einem Ölbad auf 85°C erhitzt. Sobald diese Temperatur erreicht war, dosierte man innerhalb von 3 Stunden einen Zulauf aus einer Mischung aus 72 g (0,4557 mol) α-Acetoxyacrylsäureethylester, 4 g (0,0556 mol) Acrylsäure und 4 g (0,00465 mol) Vinylacetat und gleichbeginnend über einen Zeitraum von 6 Stunden einen Zulauf aus einer Mischung aus 3,2 g tert.-Butylperoxid und 20 g Isopropanol. Die Copolymerisation wurde bei 85°C durchgeführt. Nach Beendigung der Initiatorzugabe wurde das Reaktionsgemisch noch 1,5 Stunden bei 85°C nachpolymerisiert und danach durch Zugabe von 80 g Isopropanol verdünnt. Die Lösung erstarrte beim Abkühlen. Der Feststoffgehalt der Lösung betrug 37,6 %. Das Copolymerisat hatte einen K-Wert von 19,1 (bestimmt in Aceton bei 25°C und einer Polymerkonzentration von 1 Gew.-%).

Hydrolyse:

In einem 1 Liter fassenden Rührtopf, der mit einem Rückflußkühler, einer Destillationsbrücke, Innenthermometer und Ankerrührer ausgestattet war, wurden 172 g der oben beschriebenen Polymerlösung vorgelegt und in einem Ölbad bei einer Temperatur des Ölbads von 110°C erhitzt. Man gab 134 g einer 25 gew.-%igen wässrigen Natronlauge (0,8375 mol NaOH) zu und destillierte gleichzeitig Isopropanol ab, bis die Innentemperatur (Temperatur der Reaktionsmischung) auf 100°C gestiegen war. Die sich verdikkende Masse wurde durch Zugabe von 100 g Wasser verdünnt und weitere zwei Stunden bei einer Temperatur von 100°C gehalten. Innerhalb dieser Zeit fügte man insgesamt 400 g Wasser zu. Das noch verbliebene Isopropanol wurde unter vermindertem Druck bei ca. 700 mbar aus der Reaktionsmischung entfernt. Man erhielt eine orangefarbene klare Lösung mit einem Feststoffgehalt von 13,9 %. Das Copolymerisat hatte einen K-Wert von 20,5 (bestimmt in 1 %iger wässriger Lösung bei 25°C).

Beispiel 2

Terpolymer, hergestellt aus 67 mol-% α-Acetoxyacrylsäureethylester, 18 mol-% Acrylsäure und 15 mol-% Vinylacetat.

In der in Beispiel 1 beschriebenen Vorrichtung legte man 25 g Isopropanol vor. Der Monomerzulauf bestand aus 64 g (0,4051 mol) α-Acetoxyacrylsäureethylester, 8 g (0,1111 mol) Acrylsäure und 8 g (0,0930 mol) Vinylacetat. Der Initiatorzulauf bestand wie in Beispiel 1 aus einer Lösung von 3,2 g tert.-Butylperoxid in 20 g Isopropanol. Die Monomeren wurden innerhalb von drei Stunden und der Initiator innerhalb von 6 Stunden zur Vorlage dosiert. Die Copolymerisation erfolgte bei 85°C. Die Nachpolymerisationszeit betrug zwei Stunden. Danach wurde das Reaktionsgemisch durch Zugabe von 138 g Isopropanol verdünnt. Man erhielt eine bei Raumtemperatur stark trübe Flüssigkeit mit einem Feststoffgehalt von 28,6 %. Der K-Wert des Copolymerisats betrug 19,8 (gemessen in 1-%iger Lösung in Aceton bei 25°C).

Hydrolyse

238 g der oben beschriebenen Reaktionsmischung wurden, wie in Beispiel 1 beschrieben, hydrolysiert, indem man 145 g einer 25 gew.-%igen wässrigen Natronlauge (0,9063 mol NaOH) zusetzte und gleichzeitig Isopropanol abdestillierte. Nach etwa 30 minütiger Hydrolyse erhielt man eine gelbe zähflüssige Masse, die mit 100 g Wasser zu einer groben Suspension verdünnt wurde. Nachdem die Temperatur des Reaktionsgemisches auf 100°C angestiegen war, wurde das Reaktionsgemisch zwei Stunden bei dieser Temperatur gerührt und mit 200 g Wasser versetzt. Das noch im Reaktionsgemisch verbliebene Isopropanol wurde bei einem Druck von ca. 700 mbar aus der Mischung abdestilliert. Es resultierte eine hellrote, trübe Lösung mit einem Feststoffgehalt von 23,2 %. Das Copolymerisat hatte einen K-Wert von 22,4 (bestimmt in wässriger Lösung bei einer Konzentration von 1 Gew.-% und 25°C).

Beispiel 3

Terpolymer, hergestellt aus 54 mol-% α-Acetoxyacrylsäureethylester, 17 mol % Acrylsäure und 29 mol-% Vinylacetat.

Die Copolymerisation wurde analog den Angaben in Beispiel 1 durchgeführt, jedoch verwendete man als Monomerzulauf 56 g (0,3544 mol) α-Acetoxyacrylsäureethylester, 8 g (0,1111 mol) Acrylsäure und 16 g (0,1860 mol) Vinylacetat. Die Nachpolymerisationszeit betrug 2 Stunden. Verdünnt wurde mit 80 g Isopropanol. Man erhielt eine farblose klare Polymerlösung mit einem Feststoffgehalt von 36,2 %. Das Copolymerisat hatte einen K-Wert von 19,1 (gemessen in Aceton bei 25°C und einer Polymerkonzentration von 1 Gew.-%).

Hydrolyse

178 g der oben beschriebenen Polymerlösung wurden in einem 1 Liter Rührtopf, der mit Rückflußkühler, Destillationsbrücke, Innenthermometer und Ankerrührer versehen war, vorgelegt und in einem Ölbad erhitzt, das eine Temperatur von 100°C hatte. Sobald die Innentemperatur 50°C betrug, gab man 137,6 g einer 25 gew.-%igen wässrigen Natronlauge (0,86 mol NaOH) innerhalb von 15 Minuten zu und destillierte Isopropanol ab. Es resultierte eine gelbe Suspension, die durch Zugabe von 300 g Wasser verdünnt wurde. Das restliche Isopropanol wurde bei einem Druck von 700 mbar und einer Temperatur von 85°C aus der Mischung entfernt. Es resultierte eine orange-gelbe klare Polymerlösung mit einem Feststoffgehalt von 22,1 %. Das Copolymerisat hatte einen K-Wert von 22,4 (bestimmt in 1

%iger wässriger Lösung bei 25°C).

Beispiel 4

Terpolymer, hergestellt aus 54 mol-% α-Acetoxyacrylsäureethylester, 17 mol-% Acrylsäure und 29 mol-% Vinylacetat.

Die unter Beispiel 3 beschriebene Polymerisation wurde mit den Ausnahmen wiederholt, daß man als Initiator eine Mischung aus 7,2 g tert.Butylperpivalat in Form einer 75 gew.-%igen Lösung in Aliphaten und 17 g Isopropanol einsetzte und die Monomeren über einen Zeitraum von fünf Stunden und den Initiator über einen Zeitraum von sechs Stunden dosierte. Nach einer zweistündigen Nachpolymerisationszeit und einem Verdünnen des Ansatzes mit 80 g Isopropanol erhielt man eine farblose klare Polymerlösung mit einem Feststoffgehalt von 35,5 %. Das Polymerisat hatte einen K-Wert von 13,4 (gemessen in 1 %iger Lösung in Aceton bei 25°C).

Hydrolyse

116 g der oben beschriebenen Polymerlösung wurden mit Hilfe eines Ölbades auf eine Innentemperatur von 110°C erhitzt. Sobald die Temperatur 50°C erreicht hatte, gab man langsam 125,2 g einer 25 gew.-%igen wässrigen Lösung von Kaliumhydroxid (0,5579 mol KOH) zu. Die Reaktionsmischung wurde dann zwei Stunden bei 110°C gehalten. Danach wurde Isopropanol bei einem Druck von 700 mbar und einer Temperatur von 85°C abdestilliert. Es resultierte eine orange-gelbe klare Polymerlösung mit einem Feststoffgehalt von 27,3 %. Der K-Wert des Polymerisats betrug 13,3 (bestimmt in wässriger Lösung bei 25°C und einer Polymerkonzentration von 1 %).

Beispiel 5

Terpolymer, hergestellt aus 53 mol-% α-Acetoxyacrylsäureethylester, 33 mol-% Acrylsäure und 14 mol-% Vinylacetat.

Die Polymerisation wurde analog zu Beispiel 1 durchgeführt, allerdings verwendete man als Monomerzulauf 56 g (0,3544 mol) α-Acetoxyacrylsäureethylester, 16 g (0,2222 mol) Acrylsäure und 8 g (0,0930 mol) Vinylacetat und als Initiatorzulauf 3,2 g tert.-Butylperoxid in 55 g Isopropanol. Die Nachpolymerisationszeit betrug zwei Stunden. In Abänderung der Vorschrift von Beispiel 1 gab man 45 g Isopropanol zu und erhielt eine gelbe klare Polymerlösung mit einem Feststoffgehalt von 37,9 %. Der K-Wert des Copolymerisats betrug 19,0 (bestimmt in 1 %iger Lösung in Aceton bei 25°C).

Hydrolyse

180 g der oben beschriebenen Polymerlösung wurden in der in Beispiel 1 beschriebenen Apparatur in einem auf 110°C erhitzten Ölbad aufgeheizt und durch Zugabe von 142 g 25 gew.-%iger wässriger Natronlauge (0,8875 mol NaOH) nach der in Beispiel 1 angegebenen Vorschrift hydrolysiert. Gleichzeitig wurde Isopropanol abdestilliert. Nach etwa 15 Minuten erhielt man eine gelbe Suspension, die durch Zusatz von 200 g Wasser zu einer klaren Lösung verdünnt wurde. Das restliche Isopropanol wurde unter einem Druck von etwa 700 mbar bei einer Temperatur von 85°C aus der Mischung entfernt. Es resultierte eine dunkelgelbe, klare Polymerlösung mit einem Feststoffgehalt von 27,5 %. Das Copolymerisat hatte einen K-Wert von 27,4 (bestimmt in 1 %iger wässriger Lösung bei 25°C).

Beispiel 6

Terpolymer, hergestellt aus 44 mol-% α-Acetoxyacrylsäureethylester, 16 mol-% Acrylsäure und 40 mol-% Vinylacetat.

Die im Beispiel 1 beschriebene Polymerisation wurde mit den Ausnahmen wiederholt, daß man als Monomerzulauf 48 g (0,3038 mol) α-Acetoxyacrylsäureethylester, 8 g (0,1111 mol) Acrylsäure und 24 g (0,2791 mol) Vinylacetat einsetzte und das Reaktionsgemisch zwei Stunden nachpolymerisierte. Man erhielt eine gelbe klare Polymerlösung mit einem Feststoffgehalt von 35,0 %. Das Copolymerisat hatte einen K-Wert von 29,7 (bestimmt in 1 %iger Lösung in Aceton bei 25°C).

Hydrolyse

157 g der obenbeschriebenen Copolymerisatlösung in Isopropanol wurden in einem 1 Liter fassenden Rührtopf, der mit Rückflußkühler, Destillationsbrücke, Innenthermometer und Ankerrührer ausgestattet ist, auf eine Innentemperatur von 80°C erhitzt. Sobald die Temperatur 50°C erreicht hatte, fügte man 120 g 25 gew.-%ige wässrige

Natronlauge (0,75 mol NaOH) und 200 g Wasser gleichzeitig langsam zu und verdünnte den Ansatz anschließend durch Zugabe von 300 g Wasser. Während der Hydrolyse wurde Isopropanol abdestilliert. Das restliche Isopropanol wurde unter einem Druck von etwa 700 mbar und einer Temperatur von 85°C aus der Reaktionsmischung entfernt. Es resultierte eine dunkelrote, klare Lösung mit einem Feststoffgehalt von 13,0 %. Das Copolymerisat hatte einen K-Wert von 26,7 (bestimmt in 1 %iger wässriger Lösung bei 25°C).

Beispiel 7

Terpolymer, hergestellt aus 34 mol-% α-Acetoxyacrylsäureethylester, 15 mol-% Acrylsäure und 51 mol-% Vinylacetat.

Beispiel 1 wurde mit den Ausnahmen wiederholt, daß man eine Monomermischung aus 40 g (0,2532 mol) α-Acetoxyacrylsäureethylester, 8 g (0,1111 mol) Acrylsäure und 32 g (0,373 mol) Vinylacetat einsetzte und das Reaktionsgemisch zwei Stunden nachpolymerisierte. Es resultierte eine gelbe klare Polymerlösung, die einen Feststoffgehalt von 34,3 % hatte. Der K-Wert des Copolymerisats betrug 28,0 (bestimmt in 1 %iger Lösung in Aceton bei 25°C).

Hydrolyse

166 g der oben beschriebenen Polymerlösung in Isopropanol wurden in der in Beispiel 1 beschriebenen Apparatur für die Hydrolyse vorgelegt und auf eine Innentemperatur von 80°C erhitzt. Sobald die Temperatur 50°C erreicht hatte, fügte man 126,2 g 25 gew.-%ige wässrige Natronlauge (0,7888 mol NaOH) und getrennt davon 200 g Wasser gleichzeitig langsam zu und verdünnte den Ansatz anschließend durch Zugabe von 300 g Wasser. Während der Hydrolyse wurde Isopropanol abdestilliert. Das restliche Isopropanol entfernte man unter einem Druck von 700 mbar und einer Temperatur von 85°C. Es resultierte eine rotbraune, leicht trübe Lösung, die einen Feststoffgehalt von 14,2 % hatte. Der K-Wert des Copolymerisats betrug 24,9 (bestimmt in 1 %iger wässriger Lösung bei 25°C).

Vergleichsbeispiel 1:

Copolymer, hergestellt aus 31 mol-% α-Acetoxyacrylsäureethylester und 69 mol-% Acrylsäure.

In einem 250 ml fassenden Mehrhalskolben aus Glas, der mit einem Rückflußkühler, zwei Tropftrichtern und einem Innenthermometer ausgestattet war, wurden unter einer Stickstoffatmosphäre 20 g Isopropanol vorgelegt und mit Hilfe eines Ölbades auf eine Innentemperatur von 85°C erhitzt. Dann gab man gleichzeitig einen Monomerzulauf aus einer Mischung aus 39,5 g (0,25 mol) α-Acetoxyacrylsäureethylester, 39,5 g (0,5486 mol) Acrylsäure und 50 g Isopropanol und einen Initiatorzulauf aus einer Mischung aus 13,2 g 30 gew.-%igem Wasserstoffperoxid und 25 g Wasser zu. Der Monomerzulauf wurde innerhalb von drei Stunden und der Initiatorzulauf innerhalb von sechs Stunden in das Reaktionsgefäß dosiert. Nach Beendigung des Initiatorzulaufs wurde das Reaktionsgemisch noch eine Stunde nachpolymerisiert. Es hatte sich eine hellgelbe, klare hochviskose Masse gebildet, die durch Zugabe von 60 g Isopropanol und 30 g Wasser zu einer nahezu farblosen klaren viskosen Lösung verdünnt wurde. Der Feststoffgehalt der Lösung betrug 52,0 %. Das Copolymerisat hatte einen K-Wert von 25,4 (bestimmt in 1 %iger Lösung in Aceton bei 25°C).

Hydrolyse

Das oben erhaltene Reaktionsgemisch wurde in dem in Beispiel 1 beschriebenen Gefäß für die Hydrolyse bei einer Innentemperatur von 80°C durch Zugabe von 176 g 25 gew.-%iger wässriger Natronlauge (1,1 mol NaOH) hydrolysiert. Die Natronlauge wurde innerhalb von 15 Minuten zugetropft. Gleichzeitig destillierte man Isopropanol ab, bis die Innentemperatur auf 100°C gestiegen war, und hielt die Mischung anschließend noch eine Stunde bei einer Temperatur von 100°C. Sie wurde dann so lange mit Wasser verdünnt, bis die hellgelbe viskose Lösung klar war. Hierfür benötigte man ca. 150 g Wasser. Die Lösung hatte einen Feststoffgehalt von 44,5 g. Das Copolymerisat hatte einen K-Wert von 34,0 (bestimmt in 1 %iger wässriger Lösung bei 25°C).

Vergleichsbeispiel 2:

Homopolymer, hergestellt aus α-Acetoxyacrylsäureethylester.

In einem 250 ml fassenden Mehrheitskolben aus Glas, der mit einem Blattrührer, einem Rückflußkühler, zwei Tropftrichtern und einem Innenthermometer ausgestattet war, wurden unter einer Stickstoffatmosphäre 80 g Isopropanol und 120 g (0,7595 mol) α-Acetoxyacrylsäureethylester vorgelegt und mit Hilfe eines Ölbades auf eine Temperatur von 85°C erhitzt. Innerhalb von fünf Stunden dosierte man eine Mischung aus 20 g 30 gew.-%igem Wasserstoffperoxid und 20 g Wasser. Nach Zugabe des Initiators wurde das Reaktionsgemisch noch 1,5 Stunden nachpolymerisiert und

durch Zugabe von 80 g Isopropanol und 40 g Wasser verdünnt. Man erhielt eine hellgelbe, leicht trübe viskose Lösung eines Homopolymerisats von α-Acetoxyacrylsäureethylester mit einem Feststoffgehalt von 26,5 %. Das Polymerisat hatte einen K-Wert von 27,5 (bestimmt in 1. %iger Lösung in Aceton bei 25°C).

Hydrolyse

170 g der oben beschriebenen Lösung des Homopolymerisats wurden in der in Beispiel 1 für die Hydrolyse beschriebenen Apparatur vorgelegt, auf eine Innentemperatur von 70°C erhitzt und 176,7 g 25 gew.-%iger wässriger Kalilauge (0,7874 mol KOH ≙ 110 % der theoretisch zur vollständigen Verseifung erforderlichen Basenmenge) versetzt. Gleichzeitig destillierte man Isopropanol ab, bis die Innentemperatur auf 100°C angestiegen war. Die Mischung wurde dann noch zwei Stunden bei 100°C gerührt und mit wenig Wasser verdünnt, bis eine rotbraune, klare Lösung resultierte. Der Feststoffgehalt der Polymerlösung betrug 28,6 %. Das so erhaltene Homopolymerisat der α-Hydroxyacrylsäure hatte einen K-Wert von 19,7 (bestimmt in 1 %iger wässriger Lösung bei 25°C).

Vergleichsbeispiel 3:

Copolymer, hergestellt aus 35 mol-% α-Acetoxyacrylsäureethylester und 65 mol-% Vinylacetat.

In einem 250 ml fassenden Mehrhalskolben aus Glas, der mit einem Rückflußkühler, zwei Tropftrichtern und einem Innenthermometer ausgestattet war, wurden unter einer Stickstoffatmosphäre 25 g Toluol vorgelegt und mit Hilfe eines Ölbades auf eine Temperatur von 75°C erhitzt. Sobald diese Temperatur erreicht war, gab man gleichzeitig einen Monomerzulauf aus einer Mischung aus 40 g (0,2532 mol) α-Acetoxyacrylsäureethylester und 40 g (0,4651 mol) Vinylacetat und einen Initiatorzulauf aus einer Mischung aus 8,5 g tert.Butylperpivalat (75 gew.-%ig in Aliphaten) und 18 g Toluol zu. Die Dosierung der Monomeren erfolgte innerhalb von fünf Stunden, die des Initiators innerhalb von sechs Stunden. Nach Beendigung des Initiatorzulaufs wurde das Gemisch noch zwei Stunden bei 75°C nachpolymerisiert und durch Zugabe von 80 g Aceton verdünnt. Es resultierte eine farblose, klare Polymerlösung mit einem Feststoffgehalt von 36,6 %. Der K-Wert des Copolymerisats betrug 11,2 (bestimmt in 1 %iger Lösung in Aceton bei 25°C).

Hydrolyse

135 g der oben beschriebenen Polymerlösung wurden in der in Beispiel 1 für die Hydrolyse beschriebenen Apparatur mit 69,5 g 50 gew.-%iger wäßriger Kalilauge (0,6194 mol KOH) versetzt und 4 Stunden bei 60°C gerührt. Danach wurde das Reaktionsgemisch auf eine Innentemperatur von 100°C erhitzt, das Lösemittel langsam abdestilliert und durch Zugabe von insgesamt 400 g Wasser portionsweise verdünnt. Es resultierte eine dunkelrote, klare Lösung eines Copolymerisats. Der Feststoffgehalt der Lösung betrug 16,5 %. Das Copolymerisat hatte einen K-Wert von 11,0 (bestimmt in 1 %iger wäßriger Lösung bei 25°C).

Die nach den Beispielen und Vergleichsbeispielen hergestellten Polymeren wurden bezüglich ihrer Wirkung bei der Bleichstabilisierung, des Dispergiervermögens und der Aschereduzierung nach folgenden Vorschriften geprüft:

Bleichstabilisierung

Die Prüfung erfolgte in einer phosphatfreien Waschmittelformulierung folgender Zusammensetzung (in Gew.-%):

| | |
|---|---|
| 16,7 % | Natrium-$C_{12}$-Alkylbenzolsulfonat (50 gew.-%ige wäßrige Lösung) |
| 6,7 % | Anlagerungsprodukt von 11 Mol Ethylenoxid an 1 Mol Talgfettalkohol |
| 16,7 % | Natriumperborat · 4 $H_2O$ |
| 33,3 % | Zeolith A |
| 2,92 % | Copolymer aus Acrylsäure und Maleinsäure im Gew.-Verh. 50:50 (MW = 50000) |
| 22,68 % | Natriumsulfat |
| 1 % | 2,6-Bis(amino-N,N-diessigsäure-methyl)-4-iso-dodecylphenol-Tetranatriumsalz oder Ethylendiamintetraessigsäure-Tetranatriumsalz (EDTA) als Vergleichsverbindung |

Die Waschmittelkonzentration betrug 6,2 g/l unter Verwendung von Wasser mit 25°dH. Die Zersetzung wurde durch Zugabe von 5 ppm $Cu^{2+}$ zu der auf 60°C erwärmten Waschmittel enthaltenden Flotte eingeleitet. Der Restperoxidgehalt nach 1 h Lagerung bei 60°C ist in der Tabelle als Bleichstabilisierung angegeben.

Bestimmung des Calcium-Bindevermögens (CCDK)

Meßprinzip

Die inhibierende Wirkung von Komplexbildnern oder Dispergiermitteln auf die Ausfällung von Calciumcarbonat wird durch Trübungstitration bestimmt. Es wird die zu untersuchende Substanz vorgelegt und in Gegenwart von Natriumcarbonat mit Calciumacetatlösung titriert. Der Endpunkt wird durch Bildung des Calciumcarbonat-Niederschlages angezeigt. Durch Verwendung einer ausreichenden Menge an Natriumcarbonat wird sichergestellt, daß die Messung auch dann ein korrektes Ergebnis liefert, wenn die Wirkung nicht nur auf einer Komplexierung der Caiciumionen beruht, sondern auf der Dispergierung von Calciumcarbonat. Werden nämlich zu kleine Natriumcarbonatmengen eingesetzt, besteht die Gefahr, daß das Dispergiervermögen des Produktes nicht ausgeschöpft wird; in diesem Fall wird der Titrationsendpunkt durch die Fällung des Calcium-Salzes der untersuchten Verbindung bestimmt.

Während der Titration wird die Änderung der Lichtdurchlässigkeit mit Hilfe eines Lichtleiterphotometers verfolgt. Bei letzterem wird ein über Glasfaser in die Lösung geleiteter Lichtstrahl an einem Spiegel reflektiert und die Intensität des reflektierenden Lichts gemessen.

Reagenzien

0,25 m ca$(OAC)_2$-Lösung
10 gew.-%ige $Na_2CO_3$-Lösung
1 n NaOH-Lösung
1 gew.-%ige Salzsäure

Durchführung

1 g Wirksubstanz (W.S.) in Form des Trinatriumsalzes wird in 100 ml destilliertem $H_2O$ gelöst. Anschließend werden 10 ml 10 gew.-%ige $Na_2CO_3$-Lösung zugegeben. Bei Raumtemperatur (RT) und einem während der Titration konstant gehaltenen pH-Wert von 11 und bei 80°C mit einem pH-Wert von 10 wird mit 0,25 m $Ca(OAc)_2$-Lösung kontinuierlich mit 0,2 ml/min automatisch titriert.

Berechnung

Menge mg $CaCO_3$/g W.S. = Verbrauch an $Ca(OAc)_2$-Lösung in ml x 25. Bei der automatischen Titration ist der 1. Knickpunkt der Titrationskurve der Endpunkt.

Aschereduzierung

Die inkrustationsinhibierende Wirkung (Aschereduzierung) der Polymerisate wurde jeweils in folgender Waschmittelformulierung als Additiv geprüft:

| Waschmittelformulierung | Gew.-Teile |
|---|---|
| lineares Dodecylbenzolsulfonat | 6 |
| $C_{12}C_{18}$-Alkylsulfat | 2 |
| $C_{13}C_{15}$-Oxoalkohol mit 7 EO | 7 |
| Seife | 1 |
| Na-metasilikat x 5,5 $H_2O$ | 3,5 |
| Zeolith A | 36 |
| Na-carbonat | 12 |
| Tetraacetylethylendiamin (TAED) | 3,5 |
| Na-perboratmonohydrat | 15 |
| Carboximethylcellulose (CMC) | 1,5 |

(fortgesetzt)

| Waschmittelformulierung | Gew.-Teile |
|---|---|
| Na-sulfat | 3 |
| Wasser | 4,5 |
| Additiv | 5 |

Die oben beschriebene Waschmittelformulierung enthielt die auf inkrustationsinhibierende Wirkung zu prüfenden Copolymerisate in einer Menge von 5 Gew.-%. Mit den so hergestellten Waschmittelformulierungen wurden Testgewebe aus Baumwolle gewaschen. Nach dem Waschprozeß wurde der Aschegehalt der Gewebe ermittelt, indem man 5 g des Testgewebes 2 Stunden bei einer Temperatur von 700°C veraschte.

Die Wirkung (W) des Waschmitteladditivs in der Formulierung A wird in Prozent Wirksamkeit angegeben, wobei 0 % Wirkung dem Aschegehalt ohne Inkrustationsinhibitor, d.h. ohne Waschmitteladditiv (A-ohne) entspricht und 100 % Wirkung dem Aschegehalt des Gewebes vor dem Waschen (A-Null).

Die Wirkung W des Additivs wird nach folgendem Ansatz aus dem ermittelten Aschegehalt (A-Additiv) berechnet:

$$W = \left(1 - \frac{(\text{A-Additiv}) - (\text{A-Null})}{(\text{A-ohne}) - (\text{A-Null})}\right) \times 100\ [\%]$$

Es wurden folgende Waschbedingungen gewählt:

| | |
|---|---|
| Gerät: | Launder-O-meter der Fa. Atlas |
| Zahl der Waschzyklen: | 15 |
| Waschflotte: | 250 g |
| Wasserhärte: | 4 mmol pro Liter (Ca:Mg = 4:1) |
| Waschdauer: | 30 min bei 60°C (einschließlich Aufheizzeit) |
| Flottenverhältnis: | 1:12,5 |
| Prüfgewebe: | Baumwollnesselgewebe |
| Waschmittelkonzentration: | 4,5 g/l |
| Asche-Null-Wert: | 0,04 Gew.-% |
| EMPA 211 | 0,09 Gew.-% (Eidgenössische Materialprüfungsanstalt St. Gallen, Schweiz) |

Für die Aschereduzierung wurden die in der Tabelle angegebenen Ergebnisse erhalten.

Tabelle

| Beispiel Nr. | Bleichstabilisierg. (Cu) [%] | CCDK [mg $CaCO_3$/g Polymer] | Aschereduzierung [%] |
|---|---|---|---|
| 1 | 87,7 | 670 | 30,26 |
| 2 | 91,4 | 685 | 27,35 |
| 3 | 89,4 | 635 | 18,72 |
| 4 | 77,7 | 500 | 44,16 |
| 5 | 85,6 | 660 | 38,31 |
| 6 | 85,6 | 580 | 28,66 |
| 7 | 89,9 | 500 | 44,2 |
| Vgl.Bsp. Nr. 2 | 92,2 | 250 | -21,5 |

Tabelle (fortgesetzt)

| Beispiel Nr. | Bleichstabilisierg. (Cu) [%] | CCDK [mg $CaCO_3$/g Polymer] | Aschereduzierung [%] |
|---|---|---|---|
| Vgl.Bsp. Nr. 1 | 77,3 | 220 | -4,9 |
| vgl.Bsp. Nr. 3 | 66,6 | 165 | 19,3 |
| Blindwert (kein Polymerzusatz) | 10 | 0 | 0 |

## Patentansprüche

**1.** Multifunktionelle Polymere, **dadurch gekennzeichnet, daß** sie einpolymerisierte Einheiten von

(a) α-Acyloxyacrylnitril, α-Halagenacrylsäure, α-Acyloxyacrylsäureester und/oder α-Hydroxyacrylsäure,

(b) monoethylenisch ungesättigten Carbonsäuren,

(c) Vinylestern von gesättigten aliphatischen Monocarbonsäuren und/oder Vinylalkohol und gegebenenfalls

(d) anderen mit den Monomeren (a) bis (c) copolymerisierbaren monoethyleniscit ungesättigten Monomeren und gegebenenfalls

(e) mindestens zwei ethylenisch ungesättigte Doppelbindungen enthaltenden Vernetzern

enthalten, einen K-Wert von mindestens 7 (bestimmt nach H. Fikentscher in Aceton bei 25°C und einer Polymerkonzentration von 1 Gew.-%) haben und ihre Monomereinheiten (a) und (c) gewünschtenfalls partiell oder vollständig hydrolysiert werden.

**2.** Multifunktionelle Polymere nach Anspruch 1, **dadurch gekennzeichnet, daß** sie einpolymerisierte Einheiten von

(a) 2 bis 98 mol-% α-Acyloxyacrylnitril, α-Halogenacrylsäure, α-Acyloxyacrylsäureester und/oder α-Hydroxyacrylsäure,

(b) 1 bis 95 mol-% mindestens einer monoethylenisch ungesättigten Carbonsäure,

(c) 1 bis 90 mol-% mindestens eines Vinylesters von gesättigten aliphatischen Monocarbonsäuren und/oder Vinylalkohol.

(d) 0 bis 20 mol-% anderen, mit den Monomeren (a) bis (c) copolymerisierbaren monoethylenisch ungesättigten Monomeren und

(e) 0 bis 10 mol-% eines mindestens zwei ethylenisch ungesättigte Doppelbindungen enthaltenden Vernetzers

enthalten, wobei die Summe der Angaben in mol-% immer 100 beträgt.

**3.** Multifunktionelle Polymere nach Anspruch 1 oder 2, **dadurch gekennzeichnet, daß** sie einpolymerisierte Einheiten von

(a) 5 bis 95 mol-% α-Acyloxyacrylnitril, α-Halogenacrylsäure, α-Acyloxyacrylsäureester und/oder α-Hydroxyacrylsäure,

(b) 2 bis 90 mol-% mindestens einer monoethylenisch ungesättigten Carbonsäure,

(c) 2 bis 70 mol-% mindestens eines Vinylesters von gesättigten aliphatischen Monocarbonsäuren und/oder Vinylalkohol und

(d) 0 bis 15 mol-% andere mit den Monomeren (a) bis (c) copolymerisierbare monoethylenisch ungesättigte Monomere

enthalten, wobei die Summe der Angaben in mol-% immer 100 beträgt.

4. Multifunktionelle Polymere nach einem der Ansprüche 1 bis 3, **dadurch gekennzeichnet, daß** sie einpolymerisierte Einheiten von

(a) 10 bis 90 mol-% α-Acyloxyacrylnitril, α-Halogenacrylsaure, Acyloxyacrylsäureester und/oder α-Hydroxyacrylsäure,

(b) 5 bis 80 mol-% mindestens einer monoethylenisch ungesättigten Carbonsäure,

(c) 5 bis 60 mol-% mindestens eines Vinylesters von gesättigten aliphatischen Monocarbonsäuren und/oder Vinylalkohol und

(d) 0 bis 10 mol-% anderen mit den Monomeren (a) bis (c) copolymerisierbaren monoethylenisch ungesättigten Monomeren

einpolymerisiert enthalten, wobei die Summe der Angaben in mol-% immer 100 beträgt.

5. Multifunktionelle Polymere nach einem der Ansprüche 1 bis 4, **dadurch gekennzeichnet, daß** sie einpolymerisierte Einheiten von

(a) 5 bis 95 mol-% α-Hydroxyacrylsäure,

(b) 2 bis 90 mol-% Acrylsäure, Methacrylsäure, Maleinsäure und/oder Maleinsäureanhydrid und

(c) 2 bis 70 mol-% Vinylacetat und/oder Vinylalkohol

enthalten, wobei die Summe der Angaben in mol-% immer 100 beträgt.

6. Multifunktionelle Polymere, **dadurch gekennzeichnet, daß** sie einpolymerisierte Einheiten von

(a) α-Hydroxyacrylsäure,

(b) monoethylenisch ungesättigten Carbonsäuren.

(c) partiell oder vollständig hydrolysierten Vinylestern von gesättigten aliphatischen Monocarbonsäuren und gegebenenfalls

(d) anderen mit den Monomeren (a) bis (c) copolymerisierbaren monoethylenisch ungesättigten Monomeren und gegebenenfalls

(e) mindestens zwei ethylenisch ungesättigte Doppelbindungen enthaltenden Vernetzern

enthalten und einen K-wert von mindestens 6 (bestimmt nach H. Fikentscher in Wasser bei 25°C und einer Polymerkonzentration von 1 Gew.-%) haben.

7. Verfahren zur Herstellung von multifunktionellen Polymeren nach einem der Ansprüche 1 bis 6, **dadurch gekennzeichnet, daß** man Monomermischungen aus

(a) α-Acyloxyacrylnitril, α-Halogenacrylsäure und/oder Acyloxyacrylsäureester,

(b) monoethylenisch ungesättigten Carbonsäuren,

(c) vinylestern von gesättigten aliphatischen Monocarbonsäuren und gegebenenfalls

(d) anderen mit den Monomeren (a) bis (c) copolymerisierbaren monoethylenisch ungesättigten Monomeren und gegebenenfalls

(e) mindestens zwei ethylenisch ungesättigte Doppelbindungen enthaltenden Vernetzern

in Gegenwart von Radikale bildenden polymerisationsinitiatoren copolymerisiert und gewünschtenfalls die einpolymerisierten Monomereinheiten (a) und (c) der so erhältlichen Copolymerisate partiell oder vollständig hydrolysiert.

**8.** Verfahren nach Anspruch 7, **dadurch gekennzeichnet, daß** man Monomermischungen aus

(a) 2 bis 98 mol-% α-Acyloxyacrylnitril, α-Halogenacrylsäure und/oder Acyloxyacrylsäureester,

(b) 1 bis 95 mol-% monoethylenisch ungesättigten Carbonsäuren.

(c) 1 bis 90 mol-% mindestens eines vinylesters einer aliphatischen Monocarbonsäure,

(d) 0 bis 20 mol-% anderen mit den Monomeren (a) bis (c) copolymerisierbaren monoethylenisch ungesättigten Monomeren und

(e) 0 bis 10 mol-% eines mindestens zwei ethylenisch ungesättigte Doppelbindungen enthaltenden Vernetzers,

wobei die Summe der Prozentangaben (a) bis (e) immer 100 beträgt, copolymerisiert und die Einheiten (a) und (c) der so erhältlichen Copolymerisate partiell oder vollständig hydrolysiert.

**9.** verfahren nach Anspruch 7 oder 8, **dadurch gekennzeichnet, daß** man

(a) 5 bis 95 mol-% α-Acyloxyacrylnitril, α-Chloracrylsäure und/oder α-Acetoxyacrylsäureester,

(b) 2 bis 90 mol-% Acrylsäure, Methacrylsäure, Maleinsäure und/oder Maleinsäureanhydrid und

(c) 2 bis 70 mol-% Vinylacetat

copolymerisiert, wobei die Summe der Angaben in mol-% immer 100 beträgt, und die einpolymerisierten Einheiten (a) und (c) der Copolymerisate partiell oder vollständig hydrolysiert.

**10.** Verwendung der multifunktionellen Polymeren nach einem der Ansprüche 1 bis 6 als Zusatz zu Wasch- und Reinigungsmitteln, zur Bindung mehrwertiger Metallionen, als Stabilisator bei der Textilbleiche und der Bleiche von Faserstoff für die Papierherstellung.

## Claims

**1.** Multifunctional polymers comprising polymerized units of

(a) α-acyloxyacrylonitrile, α-haloacrylic acid, α-acyloxyacrylic ester and/or α-hydroxyacrylic acid,

(b) monoethylenically unsaturated carboxylic acids,

(c) vinyl esters of saturated aliphatic monocarboxylic acids and/or vinyl alcohol and optionally

(d) other monoethylenically unsaturated monomers copolymerizable with said monomers (a) to (c) and optionally

(e) crosslinkers comprising at least two ethylenically unsaturated double bonds

having a K value of at least 7 (determined after H. Fikentscher in acetone at 25°C and a polymer concentration of 1% by weight) and whose monomer units (a) and (c) are if desired partially or completely hydrolyzed.

**2.** Multifunctional polymers as claimed in claim 1, comprising polymerized units of

(a) from 2 to 98 mol% of α-acyloxyacrylonitrile, α-haloacrylic acid, α-acyloxyacrylic ester and/or α-hydroxyacrylic acid,

(b) from 1 to 95 mol% of at least one monoethylenically unsaturated carboxylic acid,

(c) from 1 to 90 mol% of at least one vinyl ester of saturated aliphatic monocarboxylic acids and/or vinyl alcohol,

(d) from 0 to 20 mol% of other monoethylenically unsaturated monomers copolymerizable with said monomers (a) to (c) and

(e) from 0 to 10 mol% of a crosslinker comprising at least two ethylenically unsaturated double bonds,

the mol %ages always adding up to 100.

**3.** Multifunctional polymers as claimed in claim 1 or 2, comprising polymerized units of

(a) from 5 to 95 mol% of α-acyloxyacrylonitrile, α-haloacrylic acid, α-acyloxyacrylic ester and/or α-hydroxyacrylic acid,

(b) from 2 to 90 mol% of at least one monoethylenically unsaturated carboxylic acid,

(c) from 2 to 70 mol% of at least one vinyl ester of saturated aliphatic monocarboxylic acids and/or vinyl alcohol and

(d) from 0 to 15 mol% of other monoethylenically unsaturated monomers copolymerizable with said monomers (a) to (c),

the mol %ages always adding up to 100.

**4.** Multifunctional polymers as claimed in any of claims 1 to 3, comprising polymerized units of

(a) from 10 to 90 mol% of α-acyloxyacrylonitrile, α-haloacrylic acid, α-acyloxyacrylic ester and/or α-hydroxyacrylic acid,

(b) from 5 to 80 mol% of at least one monoethylenically unsaturated carboxylic acid,

(c) from 5 to 60 mol% of at least one vinyl ester of saturated aliphatic monocarboxylic acids and/or vinyl alcohol and

(d) from 0 to 10 mol% of other monoethylenically unsaturated monomers copolymerizable with said monomers (a) to (c),

the mol %ages always adding up to 100.

**5.** Multifunctional polymers as claimed in any of claims 1 to 4, comprising polymerized units of

(a) from 5 to 95 mol% of α-hydroxyacrylic acid,

(b) from 2 to 90 mol% of acrylic acid, methacrylic acid, maleic acid and/or maleic anhydride, and

(c) from 2 to 70 mol% of vinyl acetate and/or vinyl alcohol,

the mol %ages always adding up to 100.

**6.** Multifunctional polymers comprising polymerized units of

(a) α-hydroxyacrylic acid,

(b) monoethylenically unsaturated carboxylic acids,

(c) partially or completely hydrolyzed vinyl esters of saturated aliphatic monocarboxylic acids and optionally

(d) other monoethylenically unsaturated monomers copolymerizable with said monomers (a) to (c) and optionally

(e) crosslinkers comprising at least two ethylenically unsaturated double bonds

and having a K value of at least 6 (determined after H. Fikentscher in water at 25°C and a polymer concentration of 1% by weight).

**7.** A process for preparing multifunctional polymers as claimed in any of claims 1 to 6, which comprises copolymerizing monomer mixtures of

(a) α-acyloxyacrylonitrile, α-haloacrylic acid and/or α-acyloxyacrylic ester,

(b) monoethylenically unsaturated carboxylic acids,

(c) vinyl esters of saturated aliphatic monocarboxylic acids and optionally

(d) other monoethylenically unsaturated monomers copolymerizable with said monomers (a) to (c) and optionally

(e) crosslinkers comprising at least two ethylenically unsaturated double bonds

in the presence of polymerization initiators that form free radicals and if desired partially or completely hydrolyzing the polymerized monomer units (a) and (c) in the copolymers thus obtainable.

**8.** A process as claimed in claim 7, wherein monomer mixtures of

(a) from 2 to 98 mol% of α-acyloxyacrylonitrile, α-haloacrylic acid and/or α-acyloxyacrylic ester,

(b) from 1 to 95 mol% of monoethylenically unsaturated carboxylic acids,

(c) from 1 to 90 mol% of at least one vinyl ester of an aliphatic monocarboxylic acid,

(d) from 0 to 20 mol% of other monoethylenically unsaturated monomers copolymerizable with said monomers (a) to (c) and

(e) from 0 to 10 mol% of a crosslinker comprising at least two ethylenically unsaturated double bonds,

the percentages (a) to (e) always adding up to 100, are copolymerized and the units (a) and (c) in the copolymers thus obtainable are partially or completely hydrolyzed.

**9.** A process as claimed in claim 7 or 8, wherein

(a) from 5 to 95 mol% of α-acyloxyacrylonitrile, α-chloroacrylic acid and/or α-acetoxyacrylic ester,

(b) from 2 to 90 mol% of acrylic acid, methacrylic acid, maleic acid and/or maleic anhydride, and

(c) from 2 to 70 mol% of vinyl acetate

are copolymerized, the mol %ages always adding up to 100, and the polymerized units (a) and (c) in the copolymers are partially or completely hydrolyzed.

**10.** Use of the multifunctional polymers as claimed in any of claims 1 to 6 in laundry detergents and cleaners, to bind polyvalent metal ions, as a stabilizer in textile bleaching and the bleaching of pulp for papermaking.

## Revendications

**1.** Polymères multifonctionnels **caractérisés en ce qu'**ils contiennent des unités copolymérisées

(a) d'α-acyloxyacrylonitrile, d'acide α-halogénoacrylique, d'ester d'acide α-acyloxyacrylique et/ou d'acide α-hydroxyacrylique,
(b) d'acides carboxyliques monoéthyléniquement insaturés,
(c) d'esters vinyliques d'acides monocarboxyliques aliphatiques saturés et/ou d'alcool vinylique, et éventuellement
(d) d'autres monomères monoéthyléniquement insaturés, copolymérisables avec les monomères (a) à (c), et éventuellement
(e) d'agents de réticulation contenant au moins deux doubles liaisons éthyléniquement insaturées,

**en ce qu'**ils présentent une valeur K d'au moins 7 (déterminée selon H. Fikentscher dans de l'acétone à 25°C et à une concentration en polymère de 1% en poids) et **en ce que** leurs unités de monomères (a) et (c) sont éventuellement partiellement ou totalement hydrolysées.

**2.** Polymères multifonctionnels suivant la revendication 1, **caractérisés en ce qu'**ils contiennent des unités copolymérisées

(a) de 2 à 98% molaires d'α-acyloxyacrylonitrile, d'acide α-halogénoacrylique, d'ester d'acide α-acyloxyacrylique et/ou d'acide α-hydroxyacrylique,
(b) de 1 à 95% molaires d'au moins un acide carboxylique monoéthyléniquement insaturé,
(c) de 1 à 90% molaires d'au moins un ester vinylique d'acides monocarboxyliques aliphatiques saturés et/ou d'alcool vinylique,
(d) de 0 à 20% molaires d'autres monomères monoéthyléniquement insaturés, copolymérisables avec les monomères (a) à (c), et
(e) de 0 à 10% molaires d'un agent de réticulation contenant au moins deux doubles liaisons éthyléniquement insaturées,

la somme des indications en % molaires étant toujours de 100.

**3.** Polymères multifonctionnels suivant la revendication 1 ou 2, **caractérisés en ce qu'**ils contiennent des unités copolymérisées

(a) de 5 à 95% molaires d'α-acyloxyacrylonitrile, d'acide α-halogénoacrylique, d'ester d'acide α-acyloxyacrylique et/ou d'acide α-hydroxyacrylique,
(b) de 2 à 90% molaires d'au moins un acide carboxylique monoéthyléniquement insaturé,
(c) de 2 à 70% molaires d'au moins un ester vinylique d'acides monocarboxyliques aliphatiques saturés et/ou d'alcool vinylique, et
(d) de 0 à 15% molaires d'autres monomères monoéthyléniquement insaturés, copolymérisables avec les monomères (a) à (c),

la somme des indications en % molaires étant toujours de 100.

**4.** Polymères multifonctionnels suivant l'une des revendications 1 à 3, **caractérisés en ce qu'**ils contiennent des unités copolymérisées

(a) de 10 à 90% molaires d'α-acyloxyacrylonitrile, d'acide α-halogénoacrylique, d'ester d'acide acyloxyacrylique et/ou d'acide α-hydroxyacrylique,
(b) de 5 à 80% molaires d'au moins un acide carboxylique monoéthyléniquement insaturé,
(c) de 5 à 60% molaires d'au moins un ester vinylique d'acides monocarboxyliques aliphatiques saturés et/ou d'alcool vinylique, et
(d) de 0 à 10% molaires d'autres monomères monoéthyléniquement insaturés, copolymérisables avec les

monomères (a) à (c),

la somme des indications en % molaires étant toujours de 100.

5. Polymères multifonctionnels suivant l'une des revendications 1 à 4, **caractérisés en ce qu'**ils contiennent des unités copolymérisées

(a) de 5 à 95% molaires d'acide α-hydroxyacrylique,
(b) de 2 à 90% molaires d'acide acrylique, d'acide méthacrylique, d'acide maléique et/ou d'anhydride maléique, et
(c) de 2 à 70% molaires d'acétate de vinyle et/ou d'alcool vinylique,

la somme des indications en % molaires étant toujours de 100.

6. Polymères multifonctionnels, **caractérisés en ce qu'**ils contiennent des unités copolymérisées

(a) d'acide α-hydroxyacrylique,
(b) d'acides carboxyliques monoéthyléniquement insaturés,
(c) d'esters vinyliques partiellement ou totalement hydrolysés d'acides monocarboxyliques aliphatiques saturés, et éventuellement
(d) d'autres monomères monoéthyléniquement insaturés, copolymérisables avec les monomères (a) à (c), et éventuellement
(e) d'agents de réticulation contenant au moins deux doubles liaisons éthyléniquement insaturées,

et **en ce qu'**ils présentent une valeur K d'au moins 6 (déterminée selon H. Fikentscher dans de l'eau à 25°C et à une concentration en polymère de 1% en poids).

7. Procédé de préparation de polymères multifonctionnels suivant l'une des revendications 1 à 6, **caractérisé en ce qu'**on copolymérise des mélanges de monomères à base

(a) d'α-acyloxyacrylonitrile, d'acide α-halogénoacrylique, et/ou d'ester d'acide acyloxyacrylique,
(b) d'acides carboxyliques monoéthyléniquement insaturés,
(c) d'esters vinyliques d'acides monocarboxyliques aliphatiques saturés, et éventuellement
(d) d'autres monomères monoéthyléniquement insaturés, copolymérisables avec les monomères (a) à (c), et éventuellement
(e) d'agents de réticulation contenant au moins deux doubles liaisons éthyléniquement insaturées,

en présence d'amorceurs de polymérisation générateurs de radicaux et éventuellement on hydrolyse partiellement ou totalement les unités de monomères copolymérisées (a) et (c) des copolymères que l'on peut ainsi obtenir.

8. Procédé suivant la revendication 7, **caractérisé en ce qu'**on copolymérise des mélanges de monomères à base

(a) de 2 à 98% molaires d'α-acyloxyacrylonitrile, d'acide α-halogénoacrylique et/ou d'ester d'acide acyloxyacrylique,
(b) de 1 à 95% molaires d'acides carboxyliques monoéthyléniquement insaturés,
(c) de 1 à 90% molaires d'au moins un ester vinylique d'un acide monocarboxylique aliphatique,
(d) de 0 à 20% molaires d'autres monomères monoéthyléniquement insaturés, copolymérisables avec les monomères (a) à (c), et
(e) de 0 à 10% molaires d'un agent de réticulation contenant au moins deux doubles liaisons éthyléniquement insaturées,

la somme des indications en % (a) à (e) étant toujours de 100, et on hydrolyse partiellement ou totalement les unités (a) et (c) des copolymères que l'on peut ainsi obtenir.

9. Procédé suivant la revendication 7 ou 8, **caractérisé en ce qu'**on copolymérise

(a) de 5 à 95% molaires d'α-acyloxyacrylonitrile, d'acide α-chloroacrylique et/ou d'ester d'acide α-acétoxyacrylique,
(b) de 2 à 90% molaires d'acide acrylique, d'acide méthacrylique, d'acide maléique et/ou d'anhydride maléique, et
(c) de 2 à 70% molaires d'acétate de vinyle,

la somme des indications en % molaires étant toujours de 100, et on hydrolyse partiellement ou totalement les unités copolymérisées (a) et (c) des copolymères.

**10.** Utilisation des polymères multifonctionnels suivant l'une des revendications 1 à 6, comme additif à des produits de lavage et de nettoyage, pour la liaison d'ions métalliques plurivalents, comme agent stabilisant dans le blanchissage de textiles et le blanchissage de matière fibreuse pour la fabrication de papier.